# EUROPÄISCHE PATENTSCHRIFT

(11) **EP 1 518 758 B1**
(45) Veröffentlichungstag und Bekanntmachung des Hinweises auf die Patenterteilung: **07.03.2007**
(21) Anmeldenummer: 04292076.9
(22) Anmeldetag: 24.08.2004
(51) Int. Cl.: B60R 16/02

(54) **Vorrichtung zur Erfassung von Signalen von in einem Kraftfahrzeug angeordneten Sensoren**
Device for detecting signals of sensors mounted in a vehicle
Dispositif de détection de signaux de capteurs placés dans un véhicule

(30) Priorität: 25.09.2003 DE 10344464
(43) Veröffentlichungstag der Anmeldung: 30.03.2005
(73) Patentinhaber: Nexans, 75008 Paris (FR)
(72) Erfinder: Huscher, Rainer, 95679 Waldershof (DE); Mayer,Dipl. Chem.Dr Udo, 92637 Weiden (DE); Schröer, Dipl. Ing. Frank, 92637 Weiden (DE)
(74) Vertreter: Döring, Roger

(56) Entgegenhaltungen:
- EP-A- 0 113 401
- EP-B- 1 005 693
- WO-A-00/15466
- AT-B- 243 896
- US-A1- 2001 009 822
- US-B1- 6 441 510
- US-B1- 6 520 779

## Beschreibung

Die Erfindung bezieht sich auf eine Vorrichtung zur Erfassung von Signalen von in einem Kraftfahrzeug angeordneten Sensoren gemäß dem Oberbegriff des Patentanspruchs 1.

Eine solche Vorrichtung kann für unterschiedliche Zwecke an unterschiedlichen Stellen eines Kraftfahrzeugs angebracht sein. So können als Sensoren beispielsweise Temperaturfühler zur Steuerung einer im Fahrzeug vorhandenen Klimaanlage dienen, die an unterschiedlichen Stellen im Innenraum des Fahrzeugs verteilt sind. Die Sensoren können auch als Abstandsmesser im Bereich der Stoßstangen des Fahrzeugs angebracht sein. Dieser Einsatzfall der Vorrichtung wird im folgenden - stellvertretend für alle anderen möglichen Einsatzfälle derselben und ohne Beschränkung auf denselben - berücksichtigt.

Eine Anordnung zur Warnung des Fahrzeuglenkers vor einem Hindernis wird in der Fachsprache als "Park Distance Control" bezeichnet. Sie soll dem Fahrzeuglenker insbesondere beim Einparken durch optische und/oder akustische Signale angeben, wie weit er noch von einem Hindernis entfernt ist. Der Fahrzeugführer kann sein Fahrzeug dann rechtzeitig anhalten und so einen Zusammenprall mit dem Hindernis vermeiden.

Entsprechende Vorrichtungen sind bei modernen Kraftfahrzeugen bereits vorhanden. Ein derartige Vorrichtung ist aus den DE 101 18 903 A gemäß der Oberbegriff des Anspruchs 1 bekannt.

Die dabei als Abstandsmesser verwendeten Sensoren sind üblicherweise in den Stoßstangen der Kraftfahrzeuge positioniert. Jeder Sensor ist über zwei elektrische Leiter mit einer Spannungsquelle (der Batterie) des Kraftfahrzeugs und über einen Signalleiter mit einer Signalquelle desselben verbunden. Die entsprechenden Leiter werden üblicherweise in sogenannten Kabelbäumen zusammengefaßt. Je mehr Sensoren eingesetzt werden, desto dicker wird ein Kabelbaum und desto aufwendiger ist die Montage der Sensoren.

Der Erfindung liegt die Aufgabe zugrunde, die eingangs geschilderte Vorrichtung in Aufbau und Handhabung zu vereinfachen.

Diese Aufgabe wird entsprechend den kennzeichnenden Merkmalen des Patentanspruchs 1 gelöst.

Für diese Vorrichtung kann eine Flachbandleitung vorgegebener Länge bereits im Herstellerwerk mit der gewünschten Anzahl von Sensoren bestückt werden. Sie kann in dieser vollständig vorgefertigten Form beispielsweise im Bereich der Stoßstange eines Kraftfahrzeugs - im folgenden kurz "Fahrzeug" genannt - oder in der Stoßstange selbst montiert und an einem Ende mit der Spannungsquelle und der Auswerteeinheit des Fahrzeugs elektrisch leitend verbunden werden. Auch eine entsprechende Verbindungsleitung kann bereits im Herstellerwerk an die Flachbandleitung angeschlossen werden. Die Sensoren haben nach Montage dieser Vorrichtung direkt ihre gewünschte Position im Fahrzeug. Für ihren Anschluß an Spannungsquelle und Auswerteeinheit wird pro Vorrichtung nur eine Verbindungsleitung mit einer der Anzahl der Leiter der Flachbandleitung entsprechenden Anzahl von Leitern benötigt. Die Vorrichtung ist daher einfach zu montieren, da jeweils nur ein vorgefertigtes Bauteil im Fahrzeug verlegt und befestigt werden muß. Sie ist selbst insgesamt einfach und mit wenig Einzelteilen aufgebaut.

Die Sensoren sind mit der Flachbandleitung über Steckverbinder verbunden. Dazu sind im Verlauf der Flachbandleitung an den Stellen, an denen Sensoren angeschlossen werden sollen, Steckelemente mit Kontakten feuchtigkeitsdicht angebracht, welche für alle Sensoren identisch sind und mit einer der Anzahl der Leiter der Flachbandleitung entsprechenden Anzahl von Kontaktzungen sowie mit Steckerstiften ausgerüstet sind. Pro Steckelement ist jeweils nur eine der für die Signalleiter bestimmten Kontaktzungen wirksam mit einem der Signalleiter verbunden. Auf die Steckerstifte sind die mit korrespondierenden Gegenkontakten ausgerüsteten Sensoren aufgesteckt. Das kann mit Vorteil während oder nach der Montage der Flachbandleitung im Fahrzeug durchgeführt werden.

Ein mit einer Flachbandleitung mit runden Leitern ausgerüstetes, als Bussystem bezeichnetes, modulares elektronisches Übertragungssystem ist aus der EP-A1-0 113 401 an sich bekannt. Bei diesem bekannten elektronischen System ist eine Anzahl von peripheren Einheiten zur reinen Signalübertragung über jeweils einen der Leiter der Flachbandleitung mit einer Zentraleinheit verbunden. Sowohl die Zentraleinheit als auch die peripheren Einheiten haben identische Anschlußkontaktflächen. Sie sind an die Leiter der Flachbandleitung über Verbinder angeschlossen, die mit einer der Anzahl der Leiter der Flachbandleitung entsprechenden Anzahl von selbstschneidenden Kontaktelementen sowie mit der gleichen Anzahl von Aufnahmen für Steckerstifte ausgerüstet sind, die im Montagezustand in die zugehörigen Kontaktelemente eingreifen. Für jede periphere Einheit sind an entsprechender Stelle alle Kontaktelemente mit den Leitern der Flachbandleitung verbunden, während jeweils nur ein Steckerstift eingesetzt ist.

Ein Ausführungsbeispiel des Erfindungsgegenstandes ist in den Zeichnungen dargestellt.

Es zeigen:
Fig. 1 eine Vorrichtung mit Sensoren nach der Erfindung in schematischer Darstellung.
Fig. 2 die Anordnung der Sensoren nach Fig. 1 ebenfalls schematisch in vergrößerter Darstellung.
Fig. 3 einen Ausschnitt aus der Vorrichtung nach Fig. 1 in weiter vergrößerter Darstellung.
Fig. 4 einen Schnitt durch Fig. 3 in Richtung der Linie IV - IV.

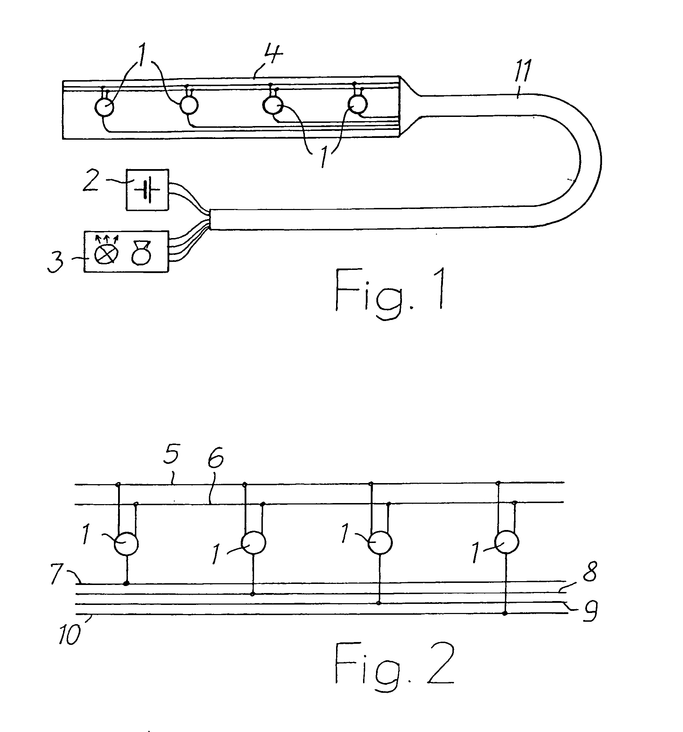

In einer Vorrichtung nach der Erfindung sind im dargestellten Ausführungsbeispiel nach Fig. 1 vier Sensoren 1 vorhanden. Die Vorrichtung kann auch mit mehr oder weniger als vier Sensoren 1 ausgerüstet sein. Sie soll mindestens zwei Sensoren 1 haben. Die Sensoren 1 sind zu ihrer Stromversorgung mit einer elektrischen Spannungsquelle 2 und außerdem mit einer Auswerteeinheit 3 - im folgenden "Signalgeber 3" genannt - verbunden, die beide in einem Fahrzeug - im folgenden kurz "PKW" genannt - angebracht sind. Die Spannungsquelle 2 ist in der Regel die Batterie des PKW's. Bei Annäherung des PKW's an ein Hindernis gibt der Signalgeber 3 optische und/oder akustische Signale ab, so daß der Fahrer seinen PKW rechtzeitig anhalten kann. Das ist besonders beim Einparken in eine Parklücke von Vorteil. Sensoren 1 sind daher auf jeden Fall am Heck eines Fahrzeugs eingebaut, vorzugsweise in dessen dortiger Stoßstange.

Die Sensoren 1 sind in der Vorrichtung nach der Erfindung mit den elektrischen Leitern einer Flachbandleitung 4 verbunden, so wie es in den Fig. 1 und 2 gezeigt ist. Die Flachbandleitung 4 - im folgenden kurz "FBL 4" genannt - ist vorzugsweise als Flachleiter-Bandleitung ausgeführt, in der flache Leiter mit rechteckigem Querschnitt parallel und mit Abstand zueinander in Isoliermaterial eingebettet sind. Die Leiter können dazu zwischen zwei Folien aus Isoliermaterial einkaschiert sein. Das Isoliermaterial kann aber auch extrudiert werden. Eine solche Leitung hat einen geringen Platzbedarf. Sie ist außerdem gut biegbar.

Die FBL 4 hat im dargestellten Ausführungsbeispiel sechs elektrische Leiter 5 bis 10. Dabei dienen die Leiter 5 und 6 zur Stromversorgung der Sensoren 1, die alle an diese beiden Leiter angeschlossen sind. Die anderen vier Leiter sind Signalleiter 7, 8, 9 und 10 zur Übertragung der von den Sensoren 1 gelieferten Signale (Informationen) an den Signalgeber 3. Dazu ist entsprechend Fig. 2 jeder Sensor 1 an einen der Signalleiter 7 bis 10 angeschlossen, so daß die Informationen der einzelnen Sensoren 1 getrennt von einander zum Signalgeber 3 übertragen werden.

An die FBL 4 ist eine Verbindungsleitung 11 angeschlossen. Sie hat im vorliegenden Ausführungsbeispiel ebenso wie die FBL 4 sechs Leiter und dient zum Anschluß der Sensoren 1 an die Spannungsquelle 2 einerseits und den Signalgeber 3 andererseits.

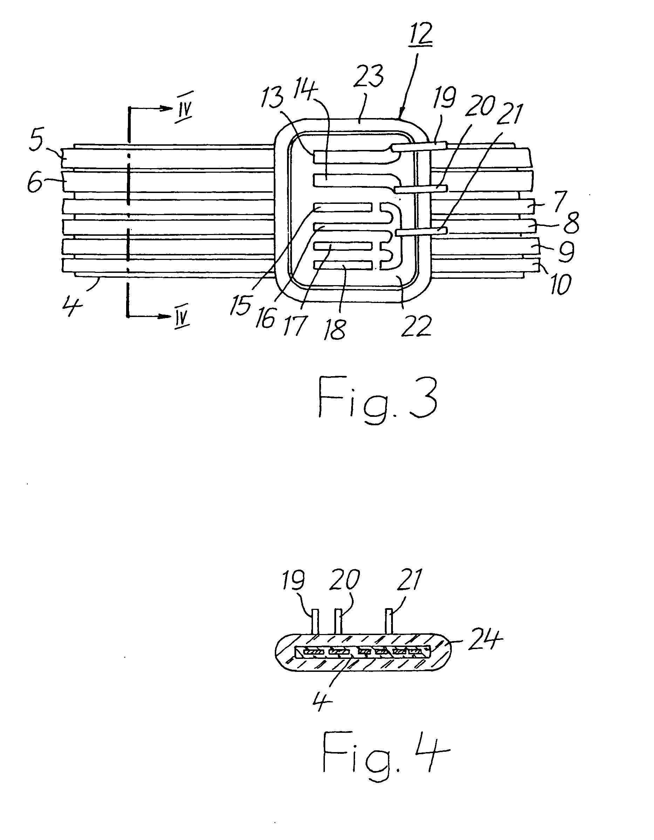

An der FBL 4 wird an jeder Anschlußstelle, an der ein Sensor 1 angeschlossen werden soll, zunächst ein Steckelement 12 feuchtigkeitsdicht angebracht. Das Steckelement 12 hat gemäß Fig. 3 sechs Kontaktzungen 13, 14, 15, 16, 17 und 18. Es weist außerdem drei Steckerstifte 19, 20 und 21 auf, die zum Aufstecken eines mit korrespondierenden Gegenkontakten ausgerüsteten Sensors 1 dienen. Die Steckelemente 12 sind für alle Anschlußstellen identisch ausgeführt. Sie haben einer der Anzahl der Leiter der FBL 4 entsprechende Anzahl von Kontaktzungen. Steckerstifte und Kontaktzungen sind in einem gemeinsamen Halter 22 aus stabilem Isoliermaterial befestigt, der in einem die FBL 4 feuchtigkeitsdicht umgebenden Rahmen 23 angebracht ist.

Zur Montage eines Steckelements 12 nach Fig. 3 und zum elektrisch leitenden Verbinden seiner Kontaktzungen 13 bis 18 mit den Leitern 5 bis 10 der FBL 4 wird beispielsweise wie folgt vorgegangen:

An einer für ein Steckelement 12 vorgesehenen Anschlußstelle wird die Isolierung der FBL 4 zumindest auf deren einer Seite über den Leitern 5 bis 10 in einem quer zur FBL 4 verlaufenden Streifen vorgegebener Breite entfernt. Der vorzugsweise aus Dichtungsmaterial bestehende Rahmen 23 eines Steckelements 12 wird dann so an der FBL 4 angebracht, daß der abisolierte Streifen frei bleibt. Daraufhin wird der Halter 22 so in den Rahmen 23 eingesetzt, daß die Enden der Kontaktzungen 13 bis 18 an den zugehörigen, jetzt blanken Leitern 5 bis 10 der FBL 4 anliegen. Vorher sind jeweils drei der Kontaktzungen 15 bis 18 unterbrochen worden, beispielsweise durch Stanzen, weil der der Verbindung eines Sensors 1 mit dem Signalgeber 3 dienende Steckerstift 21 zunächst an alle vier untereinander verbundenen Kontaktzungen 15 bis 18 angeschlossen ist. Pro Anschlußstelle werden daher drei der Kontaktzungen 15 bis 18 unterbrochen. Das gilt gemäß Fig. 3 für die Kontaktzungen 15, 16 und 18. Nicht unterbrochen ist die Kontaktzunge 17, so daß der Steckerstift 21 über die Kontaktzunge 17 und den Signalleiter 9 mit dem Signalgeber 3 verbunden ist.

Alle Kontaktzungen 13 bis 18 werden dann mit den ihnen zugeordneten Leitern der FBL 4 elektrisch leitend verbunden, vorzugsweise verschweißt oder verlötet. Das erfolgt vorzugsweise einheitlich in einem Arbeitsgang pro Anschlußstelle. Dadurch sind gemäß Fig. 3 die voneinander getrennten Kontaktzungen 13 und 14 mit den der Stromzuführung dienenden Leitern 5 und 6 und gleichzeitig die Kontaktzunge 17 mit dem Leiter 9 der FBL 4 verbunden. Das gilt auch für die Steckerstifte 19 und 20, die an den Kontaktzungen 13 und 14 angebracht sind, und den Steckerstift 21, der mit der Kontaktzunge 17 verbunden ist. Das Steckelement 12 kann abschließend unter Freilassung der freien Enden der Steckerstifte 19, 20 und 21 beispielsweise durch Spritzgießen feuchtigkeitsdicht in einen Schutzkörper 24 aus Isoliermaterial eingebettet werden. Auf die aus demselben herausragenden Steckerstifte 19, 20 und 21 kann dann ein Sensor 1 aufgesteckt werden. Die jeweilige Anschlußstelle kann aber auch beispielsweise mittels eines am Rahmen 23 angebrachten Deckels feuchtigkeitsdicht abgeschlossen werden.

Im Vorangehenden ist die Vorrichtung nach der Erfindung zum Einsatz in einem Abstandskontrollsystem für PKWs beschrieben worden. Wenn die Vorrichtung beispielsweise in einem Temperaturerfassungssystem einer Klimaanlage von PKWs verwendet werden soll, dann sind die Sensoren als Temperaturfühler ausgebildet, beispielsweise als temperaturabhängige elektrische Widerstände. Die FBL 4 benötigt dann nur einen Leiter als stromführenden Hinleiter, an den alle Temperaturfühler angeschlossen und mit der Spannungsquelle verbunden sind. Als jeweiliger stromführender Rückleiter wird einer der im Vorangehenden als Signalleiter bezeichneten Leiter verwendet, an welchen jeder Temperaturfühler unabhängig von den anderen Temperaturfühlern angeschlossen ist. Der bei diesem Anwendungsfall als Signal auszuwertende temperaturabhängige Widerstandswert wird so jeweils auf einfache Weise übertragen und ausgewertet.

## Patentansprüche

1. Vorrichtung zur Erfassung von Signalen von in einem Kraftfahrzeug angeordneten Sensoren (1), bei welcher jeweils mindestens zwei Sensoren (1) an voneinander getrennten Positionen im Kraftfahrzeug angebracht sind, die durch elektrische Leiter mit einer elektrischen Spannungsquelle (2) und einer Auswerteeinheit (3) verbunden sind, **dadurch gekennzeichnet,**
- **daß** die Sensoren (1) in an sich bekannter Weise mit Abstand zueinander an eine gemeinsame Flachbandleitung (4) mit parallel zueinander verlaufenden elektrischen Leitern (5-10) angeschlossen sind, die eine der Anzahl der anzuschließenden Sensoren entsprechende Anzahl von mit der Auswerteeinheit (3) verbindbaren Signalleitern (7-10) hat,
- **daß** die Flachbandleitung (4) zwei der Stromversorgung der Sensoren (1) dienende Leiter (5,6) und eine der Anzahl der anzuschließenden Sensoren (1) entsprechende Anzahl von nur der Signalübertragung dienenden Leitern (7-10) hat,
- **daß** an den Anschlußstellen der Sensoren (1) jeweils identische, mit den Leitern (5-10) der Flachbandleitung (4) elektrisch leitend verbundene Steckelemente (12) angebracht sind, die eine der Anzahl der Leiter (5-10) der Flachbandleitung (4) entsprechende Anzahl von fest mit denselben verbundenen Kontaktzungen (13-18) haben und die mit Steckerstiften (19,20,21) ausgerüstet sind, auf welche die Sensoren (1) aufsteckbar sind, und
- **daß** an jeder Anschlußstelle nur eine der mit den der Signalübertragung dienenden Leitern (7-10) verbundenen Kontaktzungen (13-18) elektrisch durchgängig ist, während die anderen, an die der Signalübertragung dienenden Leiter (7-10) angeschlossenen Kontaktzungen (13-18) unterbrochen sind.

2. Vorrichtung nach Anspruch 1, **dadurch gekennzeichnet, daß** die Flachbandleitung (4) als Flachleiter-Bandleitung ausgebildet ist.

3. Vorrichtung nach Anspruch 1, **dadurch gekennzeichnet, daß** die Flachbandleitung (4) einen für alle Sensoren (1) gemeinsamen, der Stromversorgung dienenden Leiter als Hinleiter und eine der Anzahl der anzuschließenden Sensoren (1) entsprechende Anzahl von Leitern als Rückleiter hat, die gleichzeitig der Signalübertragung dienende Leiter sind, wobei jeder Sensor (1) an einen der Rückleiter angeschlossen ist.

4. Verwendung einer Vorrichtung nach einem der Ansprüche 1 bis 3 für ein Abstandskontrollsystem, bei dem die Sensoren (1) im Bereich von mindestens einer Stoßstange eines Kraftfahrzeugs an der Heckseite und/oder Frontseite desselben angebracht sind.

5. Verwendung einer Vorrichtung nach einem der Ansprüche 1 bis 3 für ein Temperaturerfassungssystem einer Klimaanlage eines Kraftfahrzeugs, bei welchem die als Temperaturfühler ausgeführten Sensoren (1) im Innenraum des Kraftfahrzeugs angebracht sind.

## Claims

1. Apparatus for acquiring signals from sensors (1) which are arranged in a motor vehicle, in which apparatus at least two sensors (1) are in each case fitted at separate positions in the motor vehicle, which sensors are connected to an electrical voltage source (2) and an evaluation unit (3) by electrical conductors, **characterized**
- **in that** the sensors (1) are connected in a manner which is known per se and at a distance from one another to a common flat ribbon cable (4) by electrical conductors (5-10) which run parallel to one another, which flat ribbon cable has a number of signal conductors (7-10), which can be connected to the evaluation unit (3), which corresponds to the number of sensors to be connected,
- **in that** the flat ribbon cable (4) has two conductors (5, 6), which serve to supply power to the sensors (1), and a number of conductors (7-10), which serve only for signal transmission purposes, which corresponds to the number of sensors (1) to be connected,
- **in that** identical plug elements (12), which are electrically conductively connected to the conductors (5-10) of the flat ribbon cable (4), are in each case fitted at the connection points of the sensors (1), the said plug elements having a number of contact tongues (13-18), which are firmly connected to the same, which corresponds to the number of conductors (5-10) of the flat ribbon cable (4) and being equipped with connector pins (19, 20, 21) onto which the sensors (1) can be plugged, and
- **in that** only one of the contact tongues (13-18) which are connected via the conductors (7-10) that serve for transmission signal purposes is electrically continuous at each connection point, whereas the other contact tongues (13-18), which are connected to the conductors (7-10) which serve for signal transmission purposes, are interrupted.

2. Apparatus according to Claim 1, **characterized in that** the flat ribbon cable (4) is in the form of a flat conductor ribbon cable.

3. Apparatus according to Claim 1, **characterized in that** the flat ribbon cable (4) has a conductor which is common to all sensors (1) and serves to supply power as the feed conductor, and a number of conductors which corresponds to the number of sensors (1) to be connected as return conductors which are simultaneously conductors which serve for signal transmission purposes, with each sensor (1) being connected to one of the return conductors.

4. Use of an apparatus according to one of Claims 1 to 3 for a distance control system, in which the sensors (1) are fitted in the region of at least one bumper of a motor vehicle on the rear face and/or front face of the said motor vehicle.

5. Use of an apparatus according to one of Claims 1 to 3 for a temperature detection system of an air-conditioning system of a motor vehicle, in which the sensors (1) which are designed as temperature sensors are fitted in the interior of the motor vehicle.

## Revendications

1. Dispositif pour détecter des signaux de détecteurs (1) disposés dans un véhicule automobile, dans lequel à chaque fois au moins deux détecteurs (1) sont montés sur des positions séparées les unes des autres dans le véhicule automobile, qui sont reliés par des conducteurs électriques à une source de tension électrique (2) et une unité d'évaluation (3), **caractérisé en ce que**,
- les détecteurs (1) sont branchés de façon connue en soi avec une distance mutuelle sur un câble plat (4) commun, avec des conducteurs électriques (5 à 10) s'étendant à la parallèle les uns des autres, qui dispose d'un nombre de conducteurs de signalisation (7 à 10) susceptibles d'être reliés à l'unité d'évaluation (3) correspondant au nombre de détecteurs à brancher,
- **en ce que** le câble plat (4) dispose de deux conducteurs (5, 6) servant à l'alimentation en courant des détecteurs (1) et d'un nombre de conducteurs (7 à 10) servant uniquement à la transmission de signaux correspondant au nombre de détecteurs (1) à brancher,
- **en ce que**, sur les zones de branchement des détecteurs (1), sont montés à chaque fois des éléments de contact (12) identiques, reliés par conduction d'électricité aux conducteurs (5 à 10) du câble plat (4), qui disposent d'un nombre de languettes de contact (13 à 18) fixement reliées aux conducteurs correspondant au nombre de conducteurs (5 à 10) du câble plat (4), et qui sont équipés des pointes de contact (19, 20, 21) sur lesquelles les détecteurs (1) sont enfichables, et
- **en ce que**, sur chaque zone de branchement, seule l'une des languettes de contact (13 à 18) reliées aux conducteurs (7 à 10) servant à la transmission de signaux est électriquement interconnectée, alors que les autres languettes de contact (13 à 18) branchées sur les conducteurs (7 à 10) servant à la transmission de signaux sont interrompues.

2. Dispositif selon la revendication 1, **caractérisé en ce que** le câble plat (4) est réalisé sous la forme d'un câble plat à conducteurs plats.

3. Dispositif selon la revendication 1, **caractérisé en ce que** le câble plat (4) dispose d'un conducteur commun pour tous les détecteurs (1), servant à l'alimentation en courant en tant que conducteur aller et d'un nombre de conducteurs correspondant au nombre de détecteurs (1) à brancher en tant que conducteurs retour, qui sont simultanément des conducteurs servant à la transmission de signaux, chaque détecteur (1) étant branché sur l'un des conducteurs retour.

4. Utilisation d'un dispositif selon l'une quelconque des revendications 1 à 3 pour un système de contrôle de la distance, dans lequel les détecteurs (1) sont montés dans la région d'au moins un pare-chocs d'un véhicule automobile sur le côté arrière et/ou le côté frontal de ce dernier.

5. Utilisation d'un dispositif selon l'une quelconque des revendications 1 à 3 pour un système de détection de la température d'une climatisation d'un véhicule automobile, dans lequel les détecteurs (1), réalisés en tant que sondes de température, sont montés dans l'habitacle du véhicule automobile.
